# EUROPEAN PATENT SPECIFICATION

(11) **EP 1 998 613 B1**
(45) Date of publication and mention of the grant of the patent: **13.03.2013**
(21) Application number: 07759482.8
(22) Date of filing: 27.03.2007
(51) Int. Cl.: A01N 37/22, A01N 43/54

(54) **THE SYNERGISTIC EFFECTS OF ALS INHIBITOR HERBICIDES WHEN COMBINED WITH PROPANIL**
DIE SYNERGISTISCHEN EFFEKTE VON ALS-INHIBITORHERBIZIDEN BEI DER KOMBINATION MIT PROPANIL
EFFETS SYNERGIQUES DES HERBICIDES INHIBITEURS ALS COMBINÉS AVEC DU PROPANIL

(30) Priority: 28.03.2006 US 743869 P
(43) Date of publication of application: 10.12.2008
(73) Proprietor: Riceco, LLC, Memphis, TN 38137 (US)
(72) Inventor: LEEPER, John R., Las Cruces, New Mexico 88011 (US)
(74) Representative: Finetti, Claudia
(86) International application number: PCT/US2007/065040
(87) International publication number: WO 2007/112400

(56) References cited:
- WO-A1-01/13721
- WO-A1-03/000058
- WO-A2-03/020035
- CA-A1- 2 390 570
- DE-A1- 3 633 363
- US-A- 5 017 215
- US-A1- 2007 066 484
- US-B2- 6 743 753
- ZHANG WEI; WEBSTER ERIC P; BLOUIN DAVID C; LEON CHRISTOPHER T: "FENOXAPROP INTERACTIONS FOR BARNYARDGRASS CONTROL IN RICE" WEED TECHNOLOGY, vol. 19, 2005, pages 293-297, XP009133353 US
- HOAGLAND ROBERT E; NORSWORTHY J K; CAREY E; TALBERT R E: "METABOLICALLY BASED RESISTANCE TO THE HERBICIDE PROPANIL" WEED SCIENCE, vol. 52, May 2004 (2004-05), pages 475-486, XP009133354 US ISSN: 0043-1745
- PELLERIN K.J. ET AL.: 'Potential Use of Imazetherapy Mixtures in Drill-Seeded Imidazolinone-Resistant Rice' WEED TECHNOLOGY vol. 18, 2004, pages 1037 - 1042

## Description

### FIELD OF THE INVENTION

This invention relates to synergistic herbicidal combinations, particularly, such combinations for use in controlling weeds in rice fields.

### BACKGROUND OF THE INVENTION

Successful weed management is essential for economical rice production. In rice production, propanil-based products are applied at various leaf stages of the weeds to prevent the growth of weeds. Propanil is a photosystem II inhibitor that controls broadleaf, grass, and sedge weeds. Propanil based products, such as Super Wham® (RICECO, Inc., Memphis, TN) have broad spectrum grass, broadleaf weed and sedge contact herbicidal activity, while at the same time being safe to rice. As a general rule of thumb, for every propanil susceptible grass leaf present, up to six leaves, 1.12 kilograms (one pound) of propanil active ingredient per hectare (acre ) is needed to control the weed. Propanil resistant grasses are typically controlled by the addition of another grass herbicide to overcome resistance.

Another type of herbicide that has recognized grass activity is the ALS inhibitors. The acetolactate synthase (ALS) enzyme (also known as acetohydroxyacid synthase or AHAS) is the first step in the synthesis of the branched-chain amino acids valine, leucine, and isoleucine. These herbicides slowly starve affected plants of these amino acids which eventually lead to inhibition of DNA synthesis. They affect grasses, sedges and dicots alike. The ALS inhibitor family includes sulfonylureas (SUs), imidazolinones (IMIs), triazolopyrimidines (TPs), pyrimidinyl oxybenzoates (POBs) and sulfonylamino carbonyl triazolinones (SCTs). ALS inhibitors include: bispyribac-sodium (Regiment® (Valent U.S.A. Corp. Walnut Creek, CA) and Designee® (Cagua, Estadode Aragua, Venezuela)). Regiment® (Valent U.S.A. Corp. Walnut Creek, CA) is not labeled for use in combination with propanil due to antagonism, The Regiment® (Valent U.S.A. Corp. Walnut Creek, CA) label specifically prohibits tank mixing Regiment® (Valent U.S.A. Corp. Walnut Creek, CA) with "propanil or herbicidal mixtures which contain propanil because antagonism and/or injury will occur." The label recommended rate for Regiment® (Valent U.S.A. Corp. Walnut Creek, CA) is between 0.029 and 0.049 liters (0.4 and 0.67 ounces) (22.41 to 37.53 (9.07 to 15.19) grams bispyribac-sodium) per hectare (acre). Poor weed control results have been observed with tank mixtures of ALS inhibitor herbicides and propanil.

### SUMMARY OF THE INVENTION

When ALS inhibitor herbicides are used at substantially lower than labeled rates in combination with propanil, the activity of the combination is superior to the components when used alone. Furthermore, there are no antagonistic effects in fact they are synergistic. This surprising effect will broaden the options for economic weed control for rice farmers due to allowing for a wider application window (greater flexibility in timing of application) and broader spectrum of weed control, such as control of Sprangletop, a grass not normally controlled by propanil. This invention relates more specifically to a synergistic composition and its use to control weeds in a field of rice. The synergistic composition is made of as its active ingredient a herbicidal compound. The herbicidal compound includes a herbicidally effective amount of a propanil based herbicide and at least one ALS inhibitor herbicide in an amount sufficient to facilitate the herbicidal activity of the propanil based herbicide. More specifically, the weight ratio of the herbicidal compound ranges, from about 1.12 kilograms (1-pound) of the propanil-based herbicide to about 2.47 grams (1) of the at least one ALS inhibitor for the synergistic composition. The synergistic composition can also include as an active ingredient an effective amount of another herbicide or an insecticide, fungicide, bactericide, acaracide, nematicide, plant growth regulator, fertilizer, or plant nutrients.

### DETAILED DESCRIPTION OF THE INVENTION

This invention relates to a synergistic composition and the use of this composition to prevent the growth of weeds in a field of rice. More specifically, this invention involves a synergistic composition made of a combination of a herbicidally effective amount of a propanil based herbicide and at least one ALS inhibitor herbicide in an amount sufficient to facilitate herbicidal activity of the propanil based herbicide. A herbicidally effective amount is an amount of herbicide necessary to arrest weed growth, when the herbicide is applied to the weeds. The amount of the ALS inhibitor herbicide in this combination is an amount sufficient to facilitate herbicidal activity of the propanil based product. In the preferred embodiment, this is between 4.94-9.88 (2-4) grams of bispyribacsodium per hectare (acre) of field. In the preferred embodiment, the herbicidally effective amount of propanil range from 2.24-6.72 kilograms (2-6 pounds ) per hectare (acre) in the field. It has been found that this amount is substantially below the label rates for the use of ALS inhibitor. In general, substantial below label rates are less than half the label rates. If only an amount sufficient to facilitate the activity of the propanil based herbicide are used, then heretofore unavailable ALS inhibitor herbicides can function to control weeds in a rice crop in combination with a propanil based herbicide.

This combination produced synergistic or unexpected control of weeds in rice when applied at various times, and to rice planted in different ways. To control the weeds, the combination may be applied prior to planting, after planting but prior to flooding (pre-flood, post-emergence) or after emergence of the rice and flooding (post-flood, post-emergence) and may be applied to either direct seeded (drilled or surface seeded) or transplanted rice.

To be used in combination, it is not necessary that the two herbicides be applied in a physically combined form, or even at the same time. The combination effect results so long as the two herbicides are present on the foliage of the weeds at the same time in the rice crop, regardless of when they were applied. Thus, for instance a physical combination of the two herbicides could be applied, or one could be applied earlier than the other; however, the herbicides should be applied within 24 hours for better results.

Either herbicide could thus be applied in liquid or solid form, or a combination product containing both herbicides could be produced, again, in either liquid or solid form. Typical liquid formulations include emulsions, suspensions (including suspensions containing microcapsules), solutions, emulsifiable concentrates, and flowables. Solid forms include granules, wettable powders, water-dispersible solid (including water-dispersible granules containing microencapsulated pesticides) or dusts. Both herbicides will generally contain, in addition to the active herbicides other ingredients such as solvents, wetting agents, suspending agents, anti-caking agents, dispersing agents, emulsifiers, antifreeze agents, antifoam agents, and other additives.

Either herbicide, or both, may be utilized in one of a number of known forms of controlled release compositions. Such compositions provide relatively slow or controlled release of the active ingredient into the environment and include, for example, encapsulations, microencapsulations, and various forms of controlled release liquid or granules.

Compositions according to this invention may contain the two herbicides in numerous different physical forms. In some cases, a composition may be produced by simply physically mixing ("tank mixing") commercially available products containing the active herbicides, for example, two emulsifiable concentrates containing the herbicides. Alternatively, a package may be manufactured and sold which contains overall the two herbicides in separate containers, but packaged together, commonly termed a "twin-pack".

Alternatively, previously prepared compositions ("premixes") containing the two herbicides can be produced. Typical liquid compositions would include an emusifiable concentrate containing both herbicides, and a two-phase emulsion (or microemulsion) with one herbicide in each phase.

However, a similar solid product containing both herbicides could likewise be produced, for instance, as impregnated granules. Similarly, other solid formulations such as wettable powders or dusts could be prepared.

Again similarly, using appropriate ingredients and conditions, it would be possible to prepare microencapsulated products in which one or both herbicides are contained within a microcapsule and said microencapsulated products could be sold in either liquid form (i.e., capsule suspensions) or solid form (i.e., water-dispersible granules produced by drying of microcapsule suspensions). One type of liquid form would be a microcapsule suspension in which one of the herbicides is contained within the capsules while the other is present in a nonencapsulated form, in the continuous liquid phase. The types of formulations or compositions which may contain these two herbicides is not limited by those enumerated herein, as other types of formulations would likely be envisaged by those skilled in the art.

Additionally, other biocidically active ingredients or compositions may be combined with the herbicidal compositions of the present invention and used in the methods of the present invention. In addition, the synergistic active ingredients of the present invention can also include insecticides, fungicides, bactericides, acaracides, nematicides, plant growth regulators, fertilizers and plant nutrients, or other herbicides, especially herbicides known to be useful for controlling weeds m a rice crop. Common partner products added to propanil products to control grasses larger than six leaves and to control propanil resistant grasses include but are not limited to thiocarbamates (such as molinate and thiobencarb), chloroacetamides (such as butachlor) and auxins (such as quinclorac).

The control of weeds by the combination of the propanil based product and an amount of at least one ALS inhibitor herbicide, is illustrated by the following examples:

EXAMPLE 1 demonstrates the synergy of bispyribac-sodium (Regiment® (Valent U.S.A. Corp. Walnut Creek, CA)) when combined at substantially lower than labeled rates with propanil in controlling rice mimic (*Echinochloa sp)* in California. In this example, two base treatment programs of Cerano® (clomazone) at 13.45 kilograms (12 lb) followed Super Wham® (RICECO, Inc., Memphis, TN) at 9.35 liters (four quarts) followed by Regiment® (Valent U.S.A. Corp. Walnut Creek, CA) at 54.36 grams (22 grams) per hectare (acre) and Cerano® at 13.45 kilograms (12 lb) followed Super Wham® (RICECO, Inc., Memphis, TN) at 9.35 liters (four quarters) per hectare rice mimic control was 70%. The Regiment® (Valent U.S.A. Corp. Walnut Creek, CA) treatment of 54.36 (22) grams per hectare (acre) represents 43.49 (17.6) grams active ingredient (bispyribac-sodium). These two based treatment programs represent the standard in which to compare the efficacy of the test treatments of Super Wham® (RICECO, Inc., Memphis, TN) (propanil) and Regiment® (Valent U.S.A. Corp, Walnut Creek, CA) (bispyribac-sodium). It is also important to point out that the standard in the small plots was a double rate (2X) of Super Wham® (RICECO, Inc., Memphis, TN) (8.966 kilograms (8 pounds or 3628 grams) propanil per hectare (acre)) which achieved 90% control of the rice mimic. Super Wham® (RICECO, Inc., Memphis, TN) rates of 9.35, 11.69 and 14.03 liters (4, 5 and 6 quarts) (4482, 5604 and 6723 (1814, 2268 and 2721) grams propanil) per hectare (acre) were combined with 12.35 (5) grams Regiment® (Valent U.S.A. Corp. Walnut Creek, CA) (9.88 (4 ) grams bispyribac-sodium) per hectare (acre). This represented the use of only 22.7% of the 43.24 (17.5) grams per hectare (acre) rate of bispyribac-sodium used. All Super Wham® (RICECO, Inc., Memphis, TN) (propanil) rates combined with Regiment® (Valent U.S.A. Corp. Walnut Creek, CA) (bispyribac-sodium) achieved 90% or better control of rice mimic.

EXAMPLE 2 further demonstrates the synergy of Regiment® (Valent U.S.A. Corp, Walnut Creek, CA) when combined at substantially lower than labeled rates with propanil in controlling rice mimic (*Echinochloa sp)* in California, In this example, Super Wham® alone at 9.35 liter per hectare (4 qu/ac) product achieved 76.7 percent control of late resistant watergrass ("Rice mimic")." This therefore became the standard to which treatment with Super Wham® (RICECO, Inc., Memphis, TN) at 9.35 and 14.03 liters (4 and 6 quarts) (4482 and 6723 (1814 and 2721) grams propanil) per hectare (acre) combined with 12.35 and 6.17 (5 and 2.5) grams Regiment® (Valent U.S.A. Corp. Walnut Creek, CA) (9.88 and 4.94 (4 and 2 ) grams bispyribac-sodium) per hectare (acre) were compared. All treatments with Super Wham® (RICECO, Inc., Memphis, TN) combined with reduced rates of Regiment® (Valent U.S.A. Corp. Walnut Creek, CA) achieved 90% control of rice mimic. The 9.88 and 4.94 (4 and 2) grams rates of bispyribac-sodium represent significant reductions from the 22.41 to 37.53 (9.07 to 15.19) grams per hectare (acre) rates for bispyribac-sodium on the Regiment® (Valent U.S.A. Corp. Walnut Creek, CA) label.

EXAMPLE 3 demonstrates the synergy of bispyribac-sodium when combined at substantially lower than labeled rates with propanil in controlling *Digitaria spp, Fimbristylis spp* and *Eclipta alba* in Costa Rica, Propasint® 48 EC at rates of 7.5, 10 and 12 liters per hectare (3600, 4798 and 5760 (1457, 1942 and 2331 ) grams propanil per hectare (acre) was tested alone and in combinations with Designee® 40 SC at rates of 17, 20.4 and 24.7 milliliters per hectare (6.79, 8.15 and 9.88 (2.75, 3,3 and 4.0) grams bispyribac-sodium per hectare (acre)). The above rates of Designee® (bispyribac-sodium) were also tested alone. In this test all rates of Designee® (bispyribac-sodium) alone were ineffective at controlling *Digitaria spp, Fimbristylis spp* and *Eclipta alba* while unacceptable control of these weeds was obtained with the two lower rates of Propasint® 48 EC (propanil). The highest rate of Propasint® 48 EC (propanil) provided acceptable control of the weeds at 13 days after treatment. Control out to 26 days after treatment on un-flooded rice is not expected due to the lack of residual activity. In this example, the rates of bispyribac-sodium were between 18% and 44% the label recommended rates.

**Table 1. Digitaria spp control at 13 and 26 DAT (data average of four repetitions). La Ligia, Parrita, Costa Rica.**

| **Treat*** | **Product** | **Dosage p.c. (L /ha)** | **Control (%)** | | | |
|---|---|---|---|---|---|---|
| | | | **3-4 Leaf** | | **4Leaf-1tiller** | |
| | | | 13 DAT | 26 DAT | 13 DAT | 26 DAT |
| 1 | Propasint 48 EC +Designee 40SC | 7.5L+ 17 mL | 49 | 19 | 35 | 5 |
| 2 | Propasint 48 EC +Designee 40SC | 10 L + 17 mL | 81 | 23 | 70 | 4 |
| 3 | Propasint 48 EC +Designee 40SC | 12 L + 17 mL | 93 | 56 | 84 | 44 |
| 4 | Propasint 48 EC +Designee 40SC | 7.5L + 20.4 mL | 66 | 56 | 59 | 31 |
| 5 | Propasint 48 EC +Designee 40SC | 10 L + 20.4 mL | 90 | 71 | 80 | 39 |
| 6 | Propasint 48 EC +Designee 40SC | 12 L + 20.4 mL | 90 | 71 | 80 | 35 |
| 7 | Propasint 48 EC +Designee 40SC | 7.5 L + 24.7 mL | 91 | 51 | 81 | 24 |
| 8 | Propasint 48 EC +Designee 40SC | 10 L + 24.7 mL | 84 | 26 | 74 | 30 |
| 9 | Propasint 48 EC +Designee 40SC | 12 L + 24.7 mL | 91 | 43 | 84 | 34 |
| **12** | Propasint 48 EC | **12 L** | 91 | 68 | 84 | 21 |
| **13** | Designee 40 SC (bispiribac sodio | **17 mL** | 0 | 6 | 0 | 5 |
| **14** | Designee 40 SC (bispiribac sodio) | **20,4 mL** | 0 | 24 | 0 | 5 |
| **15** | Designee 40 SC (bispiribac sodio) | **24,7 mL** | 0 | 20 | 0 | 4 |
| **16** | Testigo sin aplicación | -------------------------- | 0 | 0 | 0 | 0 |

| | | | | | | |
|---|---|---|---|---|---|---|
| *All treatments were included penetrating of silicone Break Thru 100SL at the rate of 1, 0 ml/L. DAT : Days After Treatment | | | | | | |

**Table 2. Fimbristylis spp and Cyperus rotundus control at 13 and 26 DAT (data average of four repetitions).La Ligia, Parrita, Costa Rica.**

| **Treat*** | **Product** | **Dosage p.c (L /ha)** | **Control (%)** | | | |
|---|---|---|---|---|---|---|
| | | | ***FimbriStyls spp*** | | ***Cyperus rotundus*** | |
| | | | 13 DAT | 26 DAT | 13 DAT | 26 DAT |
| **1** | Propasint 48 EC +Designee 40 SC | **7,5 L+ 17 mL** | 48 | 1 | 0 | 0 |
| **2** | Propasint 48 EC +Designee 40 SC | **10 L + 17 mL** | 69 | 2 | 0 | 0 |
| **3** | Propasint 48 EC +Designee 40 SC | **12 L + 17 mL** | 90 | 23 | 0 | 0 |
| **4** | Propasint 48 EC +Designee 40 SC | **7,5 L + 20,4 mL** | 61 | 21 | 0 | 0 |
| **5** | Propasint 48 EC +Designee 40 SC | **10 L + 20,4 mL** | 81 | 18 | 0 | 0 |
| **6** | Propasint 48 EC +Designee 40 SC | **12 L + 20,4 mL** | 85 | 18 | 0 | 0 |
| **7** | Propasint 48 EC +Designee 40 SC | **7,5 L + 24,7 mL** | 90 | 32 | 20 | 0 |
| **8** | Propasint 48 EC +Designee 40 SC | **10 L + 24,7 mL** | 64 | 40 | 0 | 0 |
| **9** | Propasint 48 EC +Designee 40 SC | **12 L + 24,7 mL** | 83 | 2 | 21 | 0 |
| **10** | Propasint 48 EC | **7,5 L** | 43 | 1 | 0 | 0 |
| **11** | Propasint 48 EC | **10 L** | 43 | 1 | 0 | 0 |
| **12** | Propasint 48 EC | **12 L** | 90 | 4 | 0 | 0 |
| **13** | Designee 40 SC (bispiribac sodio | **17 mL** | 0 | 2 | 0 | 0 |
| **14** | Designee 40 SC (bispiribac sodio) | **20,4 mL** | 0 | 1 | 0 | 0 |
| **15** | Designee 40 SC (bispiribac sodio) | **24,7 mL** | 0 | 3 | 0 | 0 |
| **16** | Testigo sin aplicación | ------------------- | 0 | 3 | 0 | 0 |

| | | | | | | |
|---|---|---|---|---|---|---|
| *All treatments were included penetrating of silicone Break Thru 100SL at the rate of 1,0 ml/L. DAT : Days After Treatment | | | | | | |

Although the present invention has been described and illustrated with respect to preferred embodiments and a preferred user thereof, it is not to be so limited since modifications and changes can be made therein which are within the full scope of the invention.

## Claims

1. The use of a synergistic composition to control weeds while cultivating rice in a field, said composition comprising as its active ingredient a herbicidal compound:
said herbicidal composition including a herbicidally effective amount of a propanil based herbicide and at least one ALS inhibitor, wherein said ALS inhibitor herbicide includes as its active ingredient bispyribac-sodium in an amount sufficient to facilitate the herbicidal activity of said propanil based herbicide.

2. The method of claim 1 wherein said active ingredient further comprises an effective amount of a compound selected from the group consisting of: insecticide, herbicide, fungicide, bactericide, acaracide, nematicide, plant growth regulator, fertilizer, and plant nutrients.

3. The method of claim 1 wherein said amount to facilitate the herbicidal activity of said propanil-based herbicide is between 4.94-9.88 (2-4) grams of bispyribac-sodium per hectare (acre) in the field.

4. The method of claim 1 wherein said herbicidally effective amount of propanil ranges from 2.24-6.72 kilograms (2-6 pounds) per hectare (acre) in the field.

5. The method of claim 1 wherein said propanil based herbicide and said at least one ALS inhibitor are applied within 24 hours of each other.

6. The method of claim 1, wherein the weight ratio of the herbicidal compound range, from 1.12 kilograms of said propanil based herbicide to 2.47 gram of said at least one ALS inhibitor herbicide.

## Patentansprüche

1. Verwendung einer synergistischen Zusammensetzung zur Unkrautbekämpfung beim Reisanbau auf einem Feld, wobei die Zusammensetzung als ihren Wirkstoff eine herbizide Mischung umfasst:
wobei die herbizide Zusammensetzung eine herbizid wirksame Menge eines Herbizids auf der Basis von Propanil und mindestens einen ALS-Inhibitor umfasst, wobei das ALS-Inhibitorherbizid als seinen Wirkstoff Bispyribac-Natrium in einer Menge enthält, die ausreicht, um die herbizide Aktivität des Herbizids auf der Basis von Propanil zu begünstigen.

2. Verwendung nach Anspruch 1, wobei der Wirkstoff ferner eine wirksame Menge einer Mischung umfasst, die aus der Gruppe ausgewählt ist, die aus Folgendem besteht: Insektizid, Herbizid, Fungizid, Bakterizid, Akarizid, Nematizid, Wachstumsregulator, Dünger und Pflanzennährstoffe.

3. Verwendung nach Anspruch 1, wobei die Menge zum Begünstigen der herbiziden Aktivität des Herbizids auf der Basis von Propanil 4,94 bis 9,88 (2 bis 4) Gramm Bispyribac-Natrium pro Hektar (Morgen) auf dem Feld beträgt.

4. Verwendung nach Anspruch 1, wobei die herbizid wirksame Menge von Propanil 2,24 bis 6,72 Kilogramm (2 bis 6 Pfund) pro Hektar (Morgen) auf dem Feld beträgt.

5. Verwendung nach Anspruch 1, wobei das Herbizid auf der Basis von Propanil und der mindestens eine ALS-Inhibitor innerhalb von 24 Stunden voneinander aufgebracht werden.

6. Verwendung nach Anspruch 1, wobei sich das Gewichtsverhältnis der herbiziden Mischung auf 453,6 Gramm (1 Pfund) des Herbizids auf der Basis von Propanil zu 1 Gramm des mindestens einen ALS-Inhibitorherbizids beläuft.

## Revendications

1. Utilisation d'une composition synergique pour contrôler les mauvaises herbes durant la culture du riz dans un champ, ladite composition comprenant comme son ingrédient actif un composé herbicide :
ladite composition herbicide comprenant une quantité herbicide efficace d'un herbicide à base de propanil et au moins un inhibiteur ALS, dans laquelle ledit herbicide inhibiteur ALS comprend comme son ingrédient actif du bispyribac-sodium dans une quantité suffisante pour faciliter l'activité herbicide dudit herbicide à base de propanil.

2. Utilisation selon la revendication 1, dans laquelle ledit ingrédient actif comprend en outre une quantité efficace d'un composé sélectionné parmi le groupe comprenant :
insecticide, herbicide, fongicide, bactéricide, acaricide, nématicide, régulateur de croissance végétale, engrais et éléments nutritifs des plantes.

3. Utilisation selon la revendication 1, dans laquelle ladite quantité pour faciliter l'activité herbicide dudit herbicide à base de propanil est entre 4,94-9,88 (2-4) grammes de bispyribac-sodium par hectare (acre) dans le champ.

4. Utilisation selon la revendication 1, dans laquelle ladite quantité herbicide efficace de propanil est dans la plage de 2,24-6,72 kilogrammes (2-6 livres) par hectare (acre) dans le champ.

5. Utilisation selon la revendication 1, dans laquelle ledit herbicide à base de propanil et ledit au moins un inhibiteur ALS sont appliqués à moins de 24 heures l'un de l'autre.

6. Utilisation selon la revendication 1, dans laquelle le rapport de poids du composé herbicide est dans la plage de 453,6 grammes (1 livre) dudit herbicide à base de propanil à 1 gramme dudit au moins un herbicide inhibiteur ALS.
